Europäisches Patentamt

European Patent Office

Office européen des brevets

(11) Publication number: **0 032 703**
**B1**

# (12) EUROPEAN PATENT SPECIFICATION

(45) Date of publication of patent specification: **10.04.85**

(21) Application number: **81100164.3**

(22) Date of filing: **12.01.81**

(51) Int. Cl.⁴: **B 29 C 65/08**

(54) Apparatus for ultrasonically welding sheet materials.

| | |
|---|---|
| (30) Priority: **17.01.80 IT 331480** | (73) Proprietor: **Gorini, Giuseppe**<br>**Via Scornetta, 12**<br>**I-40068 San Lazzaro Di Savena (Province of**<br>**Bologna) (IT)** |
| (43) Date of publication of application:<br>**29.07.81 Bulletin 81/30** | |
| (45) Publication of the grant of the patent:<br>**10.04.85 Bulletin 85/15** | (72) Inventor: **Gorini, Giuseppe**<br>**Via Scornetta, 12**<br>**I-40068 San Lazzaro Di Savena (Province of**<br>**Bologna) (IT)** |
| (84) Designated Contracting States:<br>**DE FR GB** | |
| (56) References cited:<br>**DE-A-1 704 283**<br>**DE-A-2 543 047**<br>**FR-A-1 345 742**<br>**FR-A-1 359 269**<br>**FR-A-1 547 839**<br>**GB-A- 898 082**<br>**US-A-2 120 458**<br>**US-A-2 465 374**<br>**US-A-3 242 029**<br>**US-A-3 445 307**<br>**US-A-3 459 610**<br>**US-A-3 649 420**<br>**US-A-3 690 277**<br>**US-A-3 785 910**<br>**US-A-3 808 080**<br>**US-A-3 874 963** | (74) Representative: **Modiano, Guido et al**<br>**MODIANO & ASSOCIATI S.A.S. Via Meravigli, 16**<br>**I-20123 Milan (IT)** |

Courier Press, Leamington Spa, England.

## Description

This invention relates to ultrasonically welding sheet materials.

Currently apparatuses are known for welding sheet materials of woven and non-woven fabrics, even of a non porous or fibrous nature, through the application of ultrasonic vibration of suitable power, instead of traditional sewing. However, these apparatuses, for instance only those disclosed in US—A—3 808 080 can only be applied to some thermoplastics materials, which are either synthetical throughout or include an amount of natural fibers not exceeding about 35%. Thus, there remain non-susceptible of such an application a number of known and currently marketed synthetic materials, such as "DRALON", "VISCOSA", "RAYON", etc., materials having up to 100% natural fibers, and paper, cardboard, and the like. Moreover, direct welding of materials from the first-mentioned group, having a different nature from each other, is almost always impossible. Furthermore, there are instances of materials which, while being directly weldable together by ultrasonic vibration, do not yield optimum strength welds on account of their small thickness and width of the fabric mesh, as in the case of gauze or nets.

These factors have so far hindered a wider application of ultrasonic welding to the particular textile industry field.

In the state of the art as defined in DE—A—2 534 047 and FR—A—1 359 269 there is provided a method of ultrasonically welding sheet materials comprising the steps of interposing between two flaps of said sheet materials and along the desired weld line a strip or yarn of a thermoplastics materials, and of melting said strip or yarn to penetrate the texture of said materials by application to the overlapping flaps of ultrasonic vibration generating means, and apparatus for carrying out the method. In one embodiment of the invention, the strip may be either gauze or net.

The object of the present invention, is to provide an apparatus for implementing the aforesaid method whose features are defined in claim 1.

The aforementioned US—A—3 808 080 discloses apparatus for ultrasonically welding overlapping portions without an intermediate thermoplastics strip which nonetheless has all the features of the precharacterizing portion of claim 1.

The features of this invention will become more clearly apparent from a detailed description of a preferred embodiment of an apparatus for ultrasonically welding sheet materials, as shown by way of example in the accompanying drawings, where:

Figure 1 illustrates schematically the apparatus mode of operation;

Figure 2 is a partly sectional front view of an embodiment of the apparatus;

Figure 3 is a plan view of the apparatus of Figure 2;

Figure 4 is a side view of the apparatus of Figure 2;

Figures 5, 6, 7 and 8 show different embodiments of a guide for said strip between the flaps of the material to be welded;

Figure 9 shows a tool for cutting and welding the materials in one operation;

Figure 10 is a fragmentary elevational view of another embodiment of the apparatus of the invention;

Figures 11, 12 and 13 show further embodiments of a guide for said strip between the flaps of the materials to be welded; and

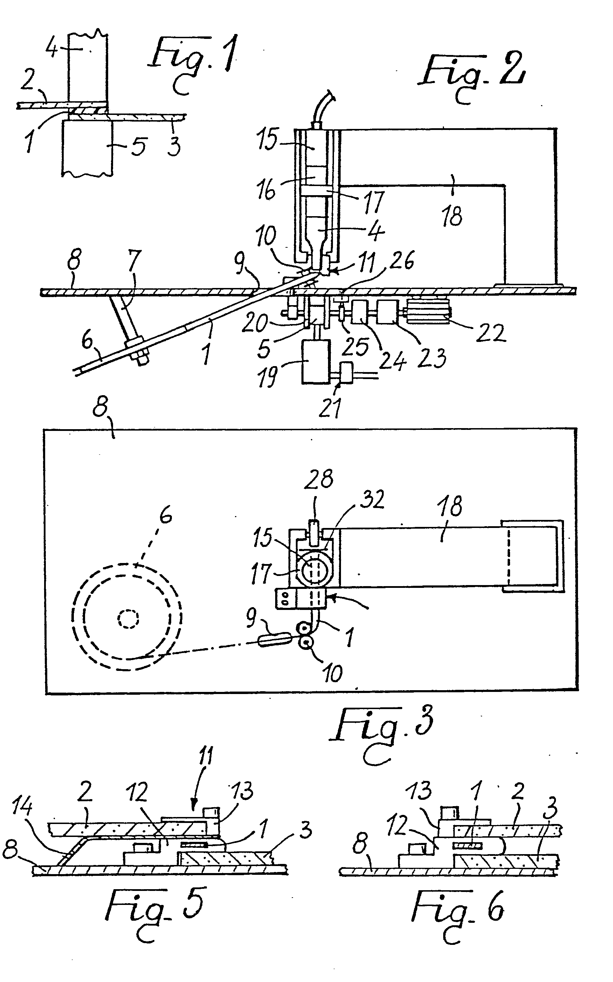

With reference to the drawings, there is indicated at 1 a strip of a thermoplastic material of small thickness dimension; of preference, that material comprises a transparent or clear polyamide, polypropylene, or other suitable material. In the instance of materials to be welded directly together in the form of thin sheets or gauze or net, it is expedient that the welding strip or yarn be made of the same material. The strip 1 is inserted between two flaps 2, 3 of woven or non-woven sheet materials, as shown schematically in Figure 1. The overlapping flaps 2, 3 are clamped between an ultrasonic resonator tool 4 and an anvil 5. The tool 4 should be sufficiently powerful to fuse the strip 1, without damaging the flaps 2, 3, and have a slightly greater width than the overlap area, such as to reliably weld the ends of the flaps themselves and create no favorable condition for separation under peeling stresses.

The anvil 5 should be formed, at least for its portion contacting the materials to be welded, from materials which are at the same time good thermal insulators and do not absorb the vibration. Normally, metals and alloys will be employed; in the case of small thickness dimensions of the materials to be united together, the invention provides for the use of granite or similar rocks, or epoxy resins of a suitable type. Thus, a quick dissipation of the heat generated is avoided, and the efficiency of the apparatus increased. The working surface of the anvil may carry an embossed pattern which would be duplicated on the pack of the materials to be united. Therefore, it can be readily dismantled to vary the dimensions and welding procedure. The strip 1 is wound around a reel 6 which can rotate about a pivot pin 7 secured under a bench 8 of the apparatus. The pivot pin 7 is inclined such as to allow the strip 1 to be paid off and passed through a slot 9 in the bench 8. Above the bench 8, the strip 1 is caught in the nip between a pair of small rollers 10, one of which is rotatable about a stationary pin and the other rotatable about a pin which is made movable to spring load, through a spring not shown, the strip between said rollers.

The rotation of the reel 6 should occur on a bushing or bearing which is slightly braked to prevent the reel momentum from relaxing the tension in the run of the strip 1 extending between the reel and small rollers 10.

The rollers 10 have their rotation axes inclined on the plane of the bench 8, to thus direct the strip 1, parallel to said plane, into guide 11 (Figure 2), which serves the function of positioning the strip 1, and flaps 2, 3 of the materials to be united with respect to one another, and enabling them to slide without mutually interfering with one another.

The guide 11, as shown in detail in Figure 5, is substantially composed of a small block 12 which defines downwardly a side detent for the lower flap 3 and a centrally located slot or passage channel for the strip 1. Above the block 12, a bracket 13 can be attached which acts as a side detent for the upper flap 2. The block 12 is protected, in its working position, by a cover 14 which extends above the rollers 10.

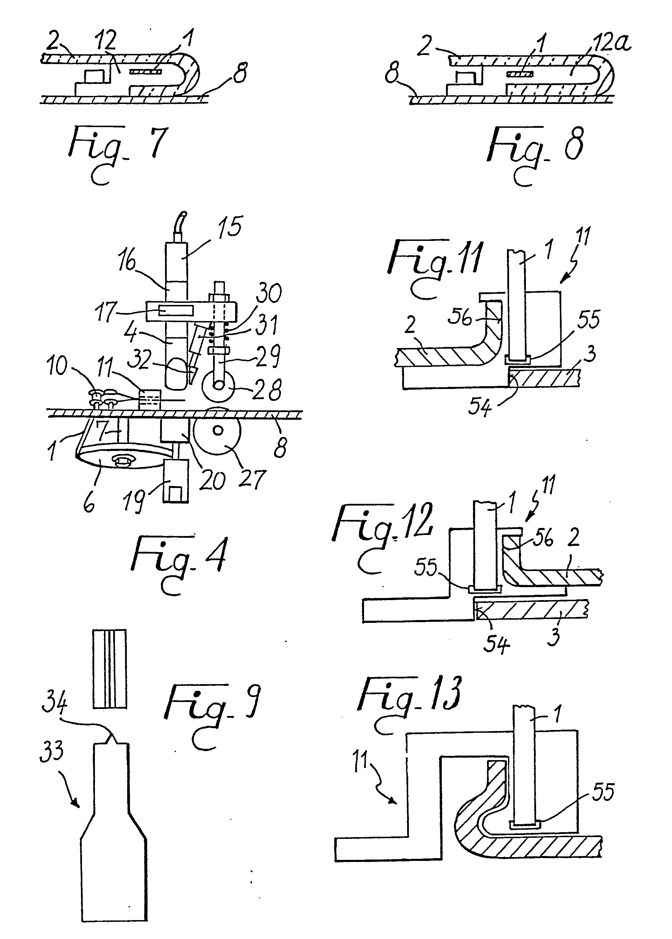

In Figure 6, there is shown the guide 11 with the bracket 13 mounted in the reverse direction on the block 12, thus enabling the welding operation to be carried out on the flaps 2, 3 with the sheets arranged on the same side, e.g. to form bags.

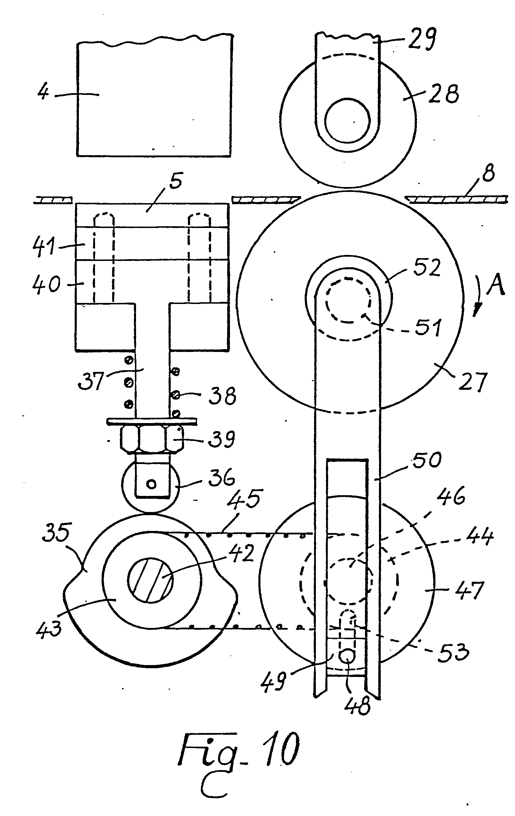

Figure 7 shows how the block 12 is used without the bracket 13 for bordering one flap only of the material, which is wound around the block.

Figure 8 shows the use of a block of elongate shape, as indicated at 12a, which enables the formation along one flap of the material of a longitudinal tube for the insertion of supports therethrough. The tool 4 is mounted coaxially below a transducer 15 (Figure 2) which is effective to generate an ultrasonic vibration, with the possible interposition of an intermediate resonator 16, which elements constitute a single vibrating assembly. The direction of the vibratory movement is perpendicular to the weld surface.

The entire vibrating assembly is supported at the center, that is where the longitudinal vibrations have minimal amplitudes, by means of a clamp 17 which is connected to an arm 18 extending from one side of the bench 8. The clamp 17 is provided with a fine pitch height adjustment screw, not shown in the drawing because of conventional construction.

At the vibrating assembly, below the bench 8, a pneumatic cylinder 19, adjustably supplied with pressurized air to achieve the best welding conditions, actuates the anvil 5 which is caused to slide on guides 20. The cylinder 19 is fed through a solenoid valve 21. The materials being treated are caused to advance intermittently under the drive of an electric motor 22 and through a speed reducer 23, electromagnetic clutch/brake assembly 24, cam 25 actuating a microswitch 26, and driving wheel 27 (Figure 4). The entire drive assembly is carried under the bench 8, only the wheel 27 protruding with a peripheral portion thereof above the latter through a specially provided opening.

With the driving wheel 27, there cooperates a biasing wheel 28, which is mounted idle or slightly braked through a suitable frictional clutch mounted at the end of a rod 29 carried by the arm 18. The biasing wheel 28 applies a pressure force which can be adjusted through a spring 30. The apparatus also comprises a strip cutting station including a second pneumatic cylinder 31 equipped with a cutting blade 32. The pneumatic cylinder 31 is secured to the arm 18 downstream of the vibrating assembly in the direction of advancement of the strip 1.

The apparatus operates as follows.

After removing the cover 14, the strip 1 is inserted into the block 12 of the guide 11, and caused to advance until its end reaches the anvil 5. After reinstalling the cover 14, the operator then brings the flaps 2, 3 of the materials to be united against the longitudinal detents of the block 12 and brackets 13, with the ends equally flush with the anvil 5, thereby the strip 1 is included between the two materials.

In the manner made clear already in Figures 6, 7, 8, it is possible to position the flaps differently on the guide, for carrying out special treatments. This method of welding with the strip 1 can also be employed for packs having more than two layers, on condition that the thickness of the strip be selected such as to penetrate all the layers involved. Through a control pushbutton or pedal of the apparatus, the operator energizes then the solenoid valve 21 actuating the pneumatic cylinder 19 which raises the anvil 5 to compress the flaps 2, 3 and strip 1 interposed against the tool 4. Thus, an initial section or portion of the materials is welded, under the effect of the ultrasonic vibration causing the strip 1 to melt and penetrate the pores of the flaps 2, 3. A suitable timer controls the welding time, and de-energizes the solenoid valve 21 at the end of it. By arranging the coil or reel 6 on one side and below the bench 8, the operator is allowed to stand in front of the apparatus. By contrast, in fully automatic apparatus, the strip 1 may be fed frontally, with the reel 6 located centrally between those of the materials to be joined.

After welding the initial section, the operator introduces that section between the driving wheel 27 and biasing idle wheel 28.

From now onwards, the apparatus operation is automatic, with an intermittent or reciprocating type of operation. That is, after completing the welding step, the anvil 5 is dropped to cause, through an electric control, the actuation of the clutch/brake assembly 24 connected to the motor 22; then, the driving wheel 27 completes a rotation arc to cause the materials to advance together, preferably over a slightly shorter distance than the weld length, thereby a continuous weld can be achieved. The switching over of the clutch/brake assembly 24 is controlled by the cam 25 acting on the microswitch 26; this same controlling operation also produces, alternatively, the upward movement of the anvil 5. Upon completion of the welding of the two flaps 2, 3, the strip 1 must be cut, which is effected by the blade 32 actuated, under control by the operator, by the second pneumatic cylinder 31. If it is desired that the cutting step be automated, it is possible to provide a photocell type of control, thanks to the strip 1 being transparent, but on condition that the materials to be joined do not happen to be transparent. Alternatively, it will be possible to install a side feeler adapted for detecting the absence of materials to be united together. In either case, the energization of such devices will also bring the machine to a stop.

The emission of ultrasonic vibration may be either continuous or controlled by a timer, depending on the operating rate of the apparatus. At low rates, a timed or clocked emission is preferable to spare energy and prevent overheating of the transducer. Anyhow, a power regulator is suitably provided for optimizing the welding in accordance with the required speed of advancement. In some cases, it will be necessary to cut the welded materials, e.g. to obtain two pieces of the material with welded, and thus non-frayed, edges, or slots.

The above cutting operation may advantageously be carried out simultaneously with the welding operation, by utilizing a tool 33, as shown in Figure 9. The vibrating tool 33 carries at its end a knife edge 34 having a slightly smaller height than the pack of the materials, to accommodate the slight reduction in thickness which results from the welding process. The welding surface of the tool 33 is the flat one on one side of the knife edge. It is also possible to effect the cutting subsequently to the welding, without prejudice for the non-fraying feature of the edges. To this aim, it will be necessary to install a pair of sharpened wheels (like the ones equipping cutters) successively to the driving station. Similar in principle to the cutting is the formation of buttonholes or holes. The welded region should completely surround the buttonhole or hole. If the operation is carried out simultaneously, with the tool vibrating at ultrasonic frequencies, its working surface will be as shown in Figure 9 but with the cutting edge totally included within the perimeter. The apparatus described hereinabove may also be made fully electropneumatically operated, by replacing the electromechanical group of the driving station with a rotary piston (also called pneumatic actuator) and a free-wheel mechanism.

Figure 10 is a fragmentary view of a fully electromechanical variation of the apparatus, which is accordingly suitable for a non-industrial application as well. In this apparatus, the reciprocation of the anvil 5 is controlled by a cam 35, which comprises two parts extending each substantially over one half of the circumference, with different curvature radii. The cam 35 turns in contact with a small wheel 36 which is mounted rotatably on the end of a rod 37 having a return spring 38. A ring nut 39 allows the compression of the spring 38 to be adjusted. The rod is terminated at the top with a support or holder 40 for the anvil 5 which is guided on pins 41. Thus, the anvil can be removed to vary the dimensions or pattern of the weld.

The cam 35 is keyed to a shaft 42 which derives its movement from an electric motor, not shown; the shaft 42 transmits the movement, through pulleys 43, 44 and a belt 45, to a second shaft 46 whereto a wheel 47 is keyed. The wheel 47 carries an eccentric pin 48 which rotates in a slider 49 arranged in turn to slide along a link block 50 for converting the rotary motion into a rotary-oscillatory motion. The link block 50 is keyed with its top end to a further shaft 51 which carries a free-wheel mechanism 52, which engages with the shaft and rotates therewith in the direction of the arrow A, whereas in the reverse direction it disengages and remains stationary. The free-wheel 52 is rigid with the driving wheel 27. Thus, the rotation of the cam 35 causes, during a half cycle, the anvil 5 to raise; the optimum welding pressure is supplied by adjustable load springs which may be accommodated either in the support of the vibrating assembly or between the support 40 and anvil 5; during this step there occurs no drive because the free-wheel 52 is disengaged from the shaft 51. During the following half cycle, concurrently with the return of the anvil, the link block 50 reverses its oscillation and the pack of materials is advanced forward. The pin 48 is secured in a slot 53, and by shifting the tightening point, it becomes possible to adjust the amplitude of the line block oscillation, and therefore the travel distance thereof.

The apparatus of the types discussed so far, which have a reciprocating type of motion, are also suitable for producing buttonholes and holes, either with insertion of the thermoplastic strip or in a direct manner (with those materials which allow it). To this aim, it will be sufficient to adjust the advancement such as to obtain the desired interval, and to mount suitable tools.

According to a further embodiment of this invention, it is possible to arrange the strip reel above the bench, e.g. by mounting it on the same arm which supports the vibrating assembly. A special configuration must be provided for the guide, in order to allow the strip to be inserted centrally. As is apparent from Figure 11, the guide 11 further comprises a side detent 54 for the lower flap 3, above which a slot or channel 55 is formed for the passage of the strip 1. The upper flap 2 follows instead a curvilinear path by means of which it is guided, from a vertical lay with respect to the flap 3, to a horizontal lay in overlapping relationship with the flap 2 at the welding area or region. Thus, in actual practice, the flap 2 is subjected to a twisting action along a detent 56 which extends along a portion of an elongate spiral.

It will be appreciated that this guide requires neither rollers nor a cover, and allows a frontal position of the operator. In Figure 12, there is illustrated a solution which, similarly to what is shown in Figure 6, proposes a guide for the flaps, wherein the sheets are all arranged on one and the same side. Similarly to Figure 8, Figure 13 shows a guide for forming a longitudinal tube or sleeve along one flap.

It has been surprisingly found that in applying the apparatus of this invention, and contrary to prior art experiences, DRALON and acrylic resin fibrous materials in general could be advantageously welded by interposing a strip made of polypropylene or of a polyamidic resin known by its trademark SUPRONYL (a registered trademark of Kalle-Niederlassung der Hoechst AG, Postfach 3540—D—6200 Wiesbaden 1) and available in two types, "N" and "W".

As an example, two pieces of a DRALON cloth for curtain use have been welded together in the manner previously described by overlying the two flaps with a small strip, 8 mm high, of SUPRONYL (registered trademark) of the W110 type (i.e. 110-micron thick), interposed therebetween, by the application of ultrasonic power as delivered by an electronic generator of approximately 1,200 Watts, at a frequency of 20KHz, to a vibrating assembly, namely a piezoelectric ceramic sandwich PZT-intermediate stagetool. The force exerted on the materials to be united, which were positioned between the tool and anvil, was of about 120 Kg. The welding time was about 0.5 seconds. The above for a weld length of approximately 50 mm.

The strength of the resulting weld was such that a tension applied to the free flaps of the joined material, in a transverse direction to the weld line, has resulted in the fabric yielding at an area remotely located from the welding area. It is also important to point out that the ultrasonic generators and transducers employed may be of any type and produce any suitable mode of vibration for welding thermoplastics materials.

## Claims

1. An apparatus for ultrasonically welding overlapping portions (2, 3) of woven and non-woven fabrics comprising a welding station including an ultrasonic vibration generating transducer (15) and a tool (4) arranged to cooperate with an anvil (5), and a feeding device (23, 24, 25, 26, 27) for advancing the fabrics characterized in that it comprises a device for inserting a strip or yarn (1) of a thermoplastics material between said overlapping portions and that said anvil (5) is driven of reciprocating motion in a direction effective to clamp and release the materials to be joined with the interposed strip (1) against the tool (4) itself.

2. An apparatus according to Claim 1, characterized in that said anvil (5) is formed from granite or the like rock or epoxy resins, and may have patterns embossed on the working surface thereof.

3. An apparatus according to Claim 1, characterized in that said driving device (23, 24, 25, 26, 27) comprises a wheel (27) arranged to rotate in rolling contact with an idle bias wheel (28) and driven by power means (22) with the interposition of means of controlling the intermittent engagement (26) of the power means (22) with the wheel (27).

4. An apparatus according to Claim 1, characterized in that for the application of the ultrasonic vibration provision is made for the use of a tool (4) having a knife edge at a central location to the welding surface, thereby the fabrics are cut simultaneously with the welding thereof.

5. An apparatus according to Claim 1, characterized in that said anvil (5) is driven of reciprocating motion through cam means (35), said means providing, through means (36) arranged to drive an oscillating link block mechanism (50), control of the intermittent advancement of a wheel feeding the fabrics with the strip (1) interposed therebetween.

## Revendications

1. Appareil pour le soudage par ultra-sons de parties en recouvrement (2, 3) d'étoffes tissées et non-tissées comprenant un poste de soudage présentant un transducteur (15) engendrant une vibration ultrasonore et un outil (4) agencé pour coopérer avec une enclume (5) et un dispositif d'alimentation (23, 24, 25, 26, 27) pour avancer les étoffes, caractérisé par le fait qu'il comprend un dispositif pour serrer une bande ou un fil (1) de matière thermoplastique entre lesdites parties en recouvrement et que ladite enclume (5) est entraînée en va-et-vient dans un sens permettant de serrer et relacher les matériaux à réunir avec la bande interposée (1) contre l'outil (4) lui-meme.

2. Appareil selon la revendication 1, caractérisé par le fait que ladite enclume (5) est constituée de granite ou pierre analogue ou en résine époxy et peut présenter des motifs estampés sur sa surface de travail.

3. Appareil selon la revendication 1, caractérisé par le fait que ledit dispositif d'entrainement (23, 24, 25, 26, 27) comprend une roue (27) conçue pour tourner en contact de roulement avec une roue d'appui folle (28), et entrainée par des moyens moteurs (22) avec interposition de moyens pour commander l'engagement intermittent (26) des moyens moteurs (22) avec la roue (27).

4. Appareil selon la revendication 1, caractérisé par le fait que pour l'application de la vibration ultrasonore, il est prévu d'utiliser un outil (4) possédant un bord coupant à un emplacement central sur la surface de soudage, les étoffes étant coupées simultanément avec leur soudage.

5. Appareil selon la revendication 1, caractérisé par le fait que ladite enclume (5) est entraînée en mouvement de va-et-vient par des moyens à came (35), lesdits moyens réalisant, au travers de moyens (36) agencés pour entrainer un mécanisme à coulisseau mobile oscillant (50), la commande de l'avance intermittente d'une roue alimentant les étoffes avec la bande (1) interposée entre elles.

## Patentansprüche

1. Vorrichtung zum Ultraschallschweissen von übereinander gelegenen Teilen (2, 3) von gewebten und nicht-gewebten Stoffen mit einer Schweisstelle, die einen Ultraschallschwingungen erzeugenden Umwandler (15) und ein Werkzeug (4), das für die Zusammenwirkung mit einem Anboss (5) angeordnet ist, aufweist, sowie mit einer Speiseeinrichtung (23, 24, 25, 26, 27) zur Vorwärtsbewegung des Stoffes, dadurch gekennzeichnet, dass sie ein Gerät aufweist zur Einführung eines Bandes oder Fadens (1) aus thermoplastischem Material zwischen den genannten übereinander gelegenen Teilen und dass dem Amboss (5) eine abwechselnde Bewegung in einer Richtung verliehen wird, die geeignet ist, die Stoffen, die mit dem dazwischengelegenen Band (1) verbindet werden sollen, gegen das Werkzeug (4) selbst zu klemmen und loszulassen.

2. Vorrichtung nach Anspruch 1, dadurch gekennzeichnet, dass der genannte Amboss (5) aus Granit oder ähnlichem Gestein oder aus einem Epoxyharz ausgebildet ist und auf seiner Arbeitsfläche eingeprägte Dessins aufweisen kann.

3. Vorrichtung nach Anspruch 1, dadurch gekennzeichnet, dass die Antriebseinrichtung (23, 24, 25, 26, 27) einen Rad (27) aufweist, der angeordnet ist, um sich mit einem leerlaufenden einseitig wirkenden Rad (28), mit dem er in rollender Berührung steht, zu drehen und der durch Antriebsmitteln (22) unter Zwischenschaltung von Mitteln zur Steuerung des zeitweiligen Eingreifens (26) der Antriebsmitteln (22) mit dem Rad (27), angetrieben ist.

4. Vorrichtung nach Anspruch 1, dadurch gekennzeichnet, dass zur Anwendung der Ultraschallschwingung, die Vorkehrung für Verwendung eines Gerätes (4), das eine Schneidekante mittig zu der Schweissfläche aufweist, getroffen ist, sodass die Stoffe gleichzeitig mit dem Schweissen derselben geschnitten werden.

5. Vorrichtung nach Anspruch 1, dadurch gekennzeichnet, dass der genannte Amboss (5) über Nockenmitteln (35) mit einer wechselweisen Bewegung angetrieben ist, wobei die genannten Mitteln, über Mitteln (36), die angeordnet sind, um ein Gelenkflaschenzugmechanismus (50) anzutreiben, die intermittierende Vorwärtsbewegung eines Rades steuern, der die Stoffe mit dem dazwischengelegenen Band (1) zuführt.

Fig. 1

Fig. 2

Fig. 3

Fig. 5

Fig. 6

Fig. 7

Fig. 8

Fig. 4

Fig. 9

Fig. 11

Fig. 12

Fig. 13

Fig. 10